(19) **Europäisches Patentamt European Patent Office Office européen des brevets**

(11) **EP 3 303 120 B1**

(12) **EUROPÄISCHE PATENTSCHRIFT**

(45) Veröffentlichungstag und Bekanntmachung des Hinweises auf die Patenterteilung:
**15.01.2020 Patentblatt 2020/03**

(21) Anmeldenummer: **16726523.0**

(22) Anmeldetag: **27.05.2016**

(51) Int Cl.:
**B63G 8/34** *(2006.01)* **B63G 13/02** *(2006.01)*
**B64D 7/00** *(2006.01)* **F41H 3/00** *(2006.01)*
**G10K 11/20** *(2006.01)* **G01S 15/06** *(2006.01)*
**G01S 15/66** *(2006.01)*

(86) Internationale Anmeldenummer:
**PCT/EP2016/062015**

(87) Internationale Veröffentlichungsnummer:
**WO 2016/189139 (01.12.2016 Gazette 2016/48)**

(54) **UNTERSEEBOOT MIT REDUZIERTER SIGNATUR**

SUBMARINE WITH REDUCED SIGNATURE

SOUS-MARIN À SIGNATURE RÉDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2015 DE 102015209723**

(43) Veröffentlichungstag der Anmeldung:
**11.04.2018 Patentblatt 2018/15**

(73) Patentinhaber:
• **thyssenkrupp Marine Systems GmbH
24143 Kiel (DE)**
• **thyssenkrupp AG
45143 Essen (DE)**

(72) Erfinder:
• **TEPPNER, Randolf
25451 Quickborn (DE)**
• **AVSIC, Tom
24161 Altenholz (DE)**

(74) Vertreter: **thyssenkrupp Intellectual Property GmbH
ThyssenKrupp Allee 1
45143 Essen (DE)**

(56) Entgegenhaltungen:
**EP-A2- 1 102 028          DE-A1- 3 332 754
DE-C1- 3 123 754          US-A- 5 128 678
US-A- 5 276 447           US-A- 5 536 910
US-A1- 2014 254 000**

**Beschreibung**

Die Erfindung betrifft ein Unterseeboot.

Fluidfahrzeuge umfassen Wasserfahrzeuge und Luftfahrzeuge. Beiden Fahrzeugen ist gemein, dass diese sich frei durch ein Fluid bewegen, wobei die Reibung zwischen dem Fluid und dem Fluidfahrzeug besonders relevant ist. Bei Wasserfahrzeugen ist die Fluidreibung aufgrund der hohen Dichte sehr relevant, bei Luftfahrzeugen aufgrund der regelmäßig hohen Geschwindigkeiten.

Für Nutzer militärischer Objekte (zu Lande, zu/unter Wasser und in der Luft) ist es ein entscheidender taktischer Vorteil, ein feindliches Objekt früher zu detektieren als das eigene Objekt von der feindlichen Seite aus detektiert wird. Um dies zu erreichen, gibt es, abgesehen von taktischen Überlegungen, zwei Methoden: auf der einen Seite über bessere Sensoren (samt folgender Datenauswertung) zu verfügen als der Gegenüber und auf der anderen Seite Objekte mit einer geringeren Signatur zu nutzen.
Es gibt immer verschiedene Signaturen, über die Objekte detektiert werden können.
Für alle nicht tief-getauchten Objekte sind dies z.B.:

- Radar-Rückstreu-Ouerschnitt
- Infrarotsignatur
- UV-Signatur
- Visuelle Erkennbarkeit
- Schallabstrahlung
- Abstrahlung elektromagnetischer Wellen durch das Objekt selbst
- etc.

Für fliegende düsengetriebene Objekte kommt z.B. noch Kondensstreifenbildung hinzu. Für alle tauchfähige Objekte gelten in oberflächennaher und Überwasserfahrt dieselben Punkte wie oben aufgelistet, tiefgetaucht sind die signifikanten Signaturen jedoch:

- Schallabstrahlung
- Akustisches Zielmaß
- Erzeugung bzw. Ablenkung elektromagnetischer Felder
- Infrarotsignatur
- Lumineszenz im Nachstrom.

Tauchfähige Objekte mit geringen Verratsreichweiten werden üblicherweise so konstruiert, dass diese eine geringe Signatur, insbesondere eine geringe Schallabstrahlung aufweisen. Hierzu wird innerhalb des Objekts alles getan, um eine Geräuschentstehung oder - ausbreitung so weit wie nötig zu verhindern, beispielsweise um einen vorgegebenen Signaturwert nicht zu überschreiten. Das gilt einerseits für die an Bord befindlichen Geräte und andererseits für die stömungsinduzierten Geräusche. Hierdurch wird die Wahrscheinlichkeit reduziert, dass ein tauchfähiges Objekt mittels eines passiven Sonars geortet wird.

Einige der Signaturen mit den längsten Reichweiten (wie z.B. Radar-Rückstreu-Ouerschnitt für fliegende Objekte und akustisches Zielmaß für tauchfähige Objekte) lassen sich auch mittels der Formgebung des Objekts optimieren. Allerdings steht diese Optimierung regelmäßig im Widerspruch zu einer strömungsgünstigen Formgebung, die für geringe Strömungsgeräusche, hohe maximal Geschwindigkeiten und große Operationsreichweiten benötigt wird.

Aus der DE 33 32 754 A1 ist ein Unterwasserschiff mit einem Schallabsorber bekannt.

Aus der DE 88 09 318 U1 ist ein Schichtsystem zur Reduktion der Reflexion bekannt.

Aus der DE 1 196 531 A ist ein Unterwasserfahrzeug mit gashaltigen Zwischenräumen bekannt.

Aus der DE 31 23 754 C1 ist ein Tarnwerkstoff aus verschiedenen Schichten bekannt.

Aus der US 5 128 678 A sind reflektierende Beschichtungen bekannt.

Aus der US 2014/254000 A1 ist ein reflektierender Schichtaufbau bekannt.

Aus der EP 1 102 028 A2 ist ein Schichtsystem als Tarnsystem bekannt.

Aus der US 5 536 910 A ein Schallwellen absorbierendes Medium bekannt.

Aus der US 5 276 447 A ist ein Schichtaufbau zur Reduktion der Radarsignatur bekannt.

Die Aufgabe der Erfindung ist es, die Widersprüche zwischen signaturoptimierter äußerer Form und einer äußeren Form, die geometrisch auf andere Anforderungen (z.B. strömungstechnische oder auf eine andere Signatur) hin optimiert wurde, aufzulösen.

Gelöst wird die Aufgabe durch ein Unterseeboot mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Unterseeboot weist eine erste Hülle und eine zweite Hülle auf, wobei die zweite Hülle wenigstens in einem ersten Bereich unter der ersten Hülle angeordnet ist. Die erste Hülle kann als Außenhaut bezeichnet werden. Erfindungsgemäß handelt es sich bei dem Fluidfahrzeugt um ein Wasserfahrzeug, erfindungsgemäß um ein Unterseeboot. Die zweite Hülle muss nicht vollflächig unter der ersten Hülle sein. Auch muss die erste oder zweite Hülle keine umfassende oder geschlossene Hülle sein. Insbesondere reicht es aus, wenn die zweite Hülle wenigstens in einem ersten Bereich unter der ersten Hülle angeordnet ist, beispielsweise bei einem Unterseeboot am Bug oder am Turm. Hierdurch wird zwar nur die Signatur in diesen Bereichen optimiert, aber gerade dieser wenigstens eine erste Bereich trägt wesentlich zur unerwünschten Signatur bei, beispielsweise wenn dort viele oder starke Streuer lokalisiert sind. Der Turm samt den in seinem Inneren befindlichen Ausfahrgeräten ist beispielsweise bei Überwasserfahrt eines Unterseeboots der für Radar den Rückstreuquerschnitt des Unterseebootes bestimmende Teil. Eine Optimierung alleine des Turms als ein Beispiel für wenigstens einen ersten Bereich trägt somit wesentlich zur Optimierung der Radarsignatur des gesamten Unterseeboots bei.

Unter Signatur wird im Rahmen dieser Anmeldung jede direkte Reflektion einer von einer externen Signalquelle ausgesendeten Detektionswelle an einer Oberfläche des Fluidfahrzeugs in Richtung der Signalquelle verstanden.

Die erste Hülle ist fluiddynamisch optimiert und bestimmt daher im Falle des Unterseeboots bei Tauchfahrt die hydrodynamischen Eigenschaften des Bootes. Um eine Entkopplung zwischen dem Hüllendesign zu schaffen, welches fluiddynamisch optimiert ist, und dem Hüllendesign, welches zur Reduktion der Signatur optimiert wäre, wird die erste Hülle so ausgebildet, dass die erste Hülle für eine erste Detektionswelle transparent ist. Typische Detektionswellen sind Schallwellen (Sonar) und elektromagnetische Wellen (Radar). Unter transparent ist im Sinne der Erfindung zu verstehen, dass die Reflexion an der Hülle weniger als 25 %, bevorzugt weniger als 10 % der einfallenden Intensität beträgt. Die zweite Hülle ist für die erste Detektionswelle undurchlässig, wobei unter undurchlässig im Sinne der Erfindung verstanden wird, dass weniger als 25 %, bevorzugt weniger als 10 % der eintreffenden Strahlungsintensität transmittiert werden. Typischerweise wird die Transmissionsdämmung durch eine Reflektivität und/oder eine Absorption erreicht, besonders bevorzugt durch eine Reflektivität oder durch eine Kombination aus Reflektivität und Absorption. Die Form der zweiten Hülle ist zur Minimierung der Signatur gegenüber der ersten Detektionswelle optimiert. Hierdurch ist es möglich, die Form der ersten Hülle, welche für die fluiddynamischen Eigenschaften wesentlich ist, und die Form der zweiten Hülle, welche für die Signatur wesentlich ist, vollständig zu entkoppeln. Die zweite Hülle ist für die erste Detektionswelle reflektierend. Unter reflektierend wird verstanden, wenn mehr als 50 % der Intensität der ersten Detektionswelle gerichtet reflektiert werden. Somit sind Absorption und Streuung geringer als die Reflexion. Vorteil der Reflexion ist die gute Vorhersagbarkeit des Verhaltens gegenüber einer eintreffenden ersten Detektionswelle.

Bevorzugt wird mehr als 75% der Intensität der ersten Detektionswelle, besonders bevorzugt mehr als 90% der Intensität der ersten Detektionswelle reflektiert.

Zum Verständnis sei beispielsweise der Fall eines Unterseeboots mit einer ersten Hülle aus Stahl und einer zweiten Hülle aus Hartschaum dargestellt, wobei die erste Hülle, die Außenhülle des Unterseeboots, von Wasser hinterspült ist. Eine solche Ausführung der ersten Hülle ist typisch für Zweihüllenboote sowie für Einhüllenboote in Bereich des Bugs oder des Turms.

Für die Reflexion und Transmission einer Schallwelle, welche als Detektionswelle im Sonar eingesetzt wird, ist bei einer ebenen Platte die Schallkennimpedanz $Z_F$ und die Schichtdicke d relevant, wobei die Schallkennimpedanz $Z_F$ das Produkt aus Dichte $\rho$ und Schallgeschwindigkeit c ist. Der Reflexionskoeffizient einer ebenen Platte im Wasser (Reflektierter Schalldruck im Verhältnis zum einfallenden Schalldruck) berechnet sich für den senkrechten Schalleinfall wie folgt:

$$R = \frac{i\left(\frac{Z_{F,1}}{Z_{F,0}} - \frac{Z_{F,0}}{Z_{F,1}}\right)\sin\left(dk_1\right)}{2\cos\left(dk_1\right) + i\left(\frac{Z_{F,1}}{Z_{F,0}} - \frac{Z_{F,0}}{Z_{F,1}}\right)\sin\left(dk_1\right)},$$

mit $Z_{F,0}$ die Schallkennimpedanz des Wassers und $Z_{F,1}$ die Schallkennimpedanz der Platte aus dem Material 1. Die Wellenzahl in der Platte ist $k_1 = 2\pi f/c$, wobei f die Frequenz ist. Für Materialien ohne Absorption gilt $R^2 + T^2 = 1$, wobei T der Transmissionskoeffizient ist.

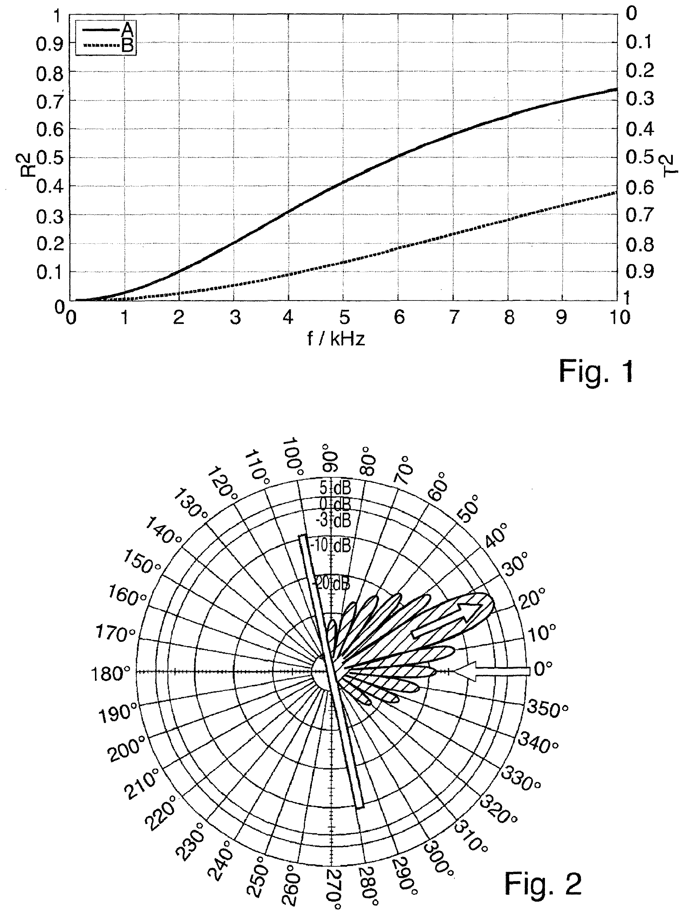

In erster Näherung beträgt die Dichte von Wasser $\rho_{Wasser}$ 1.000 kg/m³ und die Schallgeschwindigkeit $c_{Wasser}$ 1.500 m/s. Somit ist $Z_{F,Wasser}$ etwa $1,5 \cdot 10^6$ Ns/m³. Für Stahl ist die Dichte in erster Näherung $\rho_{Stahl}$ 8.000 kg/m³ und die Schallgeschwindigkeit $c_{Stahl}$ 6.000 m/s. Somit ist $Z_{F,Stahl}$ etwa $48 \cdot 10^6$ Ns/m³. Zwar unterscheiden sich die Schallkennimpedanz von Wasser und Stahl etwa um den Faktor 30, da die Schallgeschwindigkeit in Stahl jedoch sehr hoch ist und die Schichtdicken der Strömungshülle klein ist, ergibt sich, dass das Produkt $dk_1$ ebenfalls klein ist (bei 1 kHz etwa 0,01) und somit R klein ist. In Figur 1 ist der Reflexionskoeffizient bezüglich der Intensität ($|R^2|$) für eine 10 mm dicke Stahlplatte und eine 20 mm dicke GFK-Platte (Platte aus Glasfaser-verstärktem Kunststoff) in Wasser in Abhängigkeit von der Frequenz gezeigt. Erkennbar sind der prinzipiell ähnliche Verlauf und die insgesamt höhere Transparenz der GFK Platte selbst bei höheren Frequenzen.

Man unterscheidet niederfrequente Aktivsonare, welche bei 50 Hz bis 3 kHz arbeiten, mittelfrequente Aktivsonare, welche bei 3 kHz bis 15 kHz arbeiten, und hochfrequente Aktivsonare. Zur Ortung von Unterseebooten werden aufgrund der geringen Dämpfung im Seewasser und der damit verbundenen großen Reichweite vor allem niederfrequente Aktivsonare eingesetzt. Wie Figur 1 zu entnehmen ist, weist eine Stahlplatte in diesem Frequenzbereich einen hohen Transmissionsfaktor auf.

Die Reduktion lässt sich weiter reduzieren, indem als Material für die erste Hülle ein faserverstärkter Verbundwerkstoff (FVW) verwendet wird, beispielsweise das in Figur 1 gezeigte GFK Material. Für ein solches Material beträgt in erster Näherung die Dichte $\rho_{FVW}$ 2.000 kg/m³ und die Schallgeschwindigkeit $c_{FVW}$ 3.000 m/s. Somit ist $Z_{F,FVW}$ etwa $6 \cdot 10^6$ Ns/m³. Dieser zahlenmäßige Effekt wird jedoch teilweise dadurch wieder kompensiert, dass eine erste Hülle aus einem faserverstärkten Verbundwerkstoff regelmäßig dicker als eine erste Hülle aus Stahl sein muss.

Bei einem Übergang zu Luft tritt regelmäßig Reflexion auf, da die Schallkennimpedanz für Luft sich in erster Näherung mit einer Dichte von $\rho_{Luft}$ 1,3 kg/m$^3$ und einer Schallgeschwindigkeit von $c_{Luft}$ 340 m/s zu etwa $Z_{F,Luft}$ etwa 442 Ns/m$^3$ ergibt. Somit tritt am luftgefüllten Druckkörper praktisch vollständige Reflexion auf. Der Druckkörper muss jedoch aus technischen Gründen regelmäßig rund ausgeführt sein, um den hohen Drücken bei maximaler Tauchtiefe Stand halten zu können.

Als Material für die zweite Hülle eignen sich daher beispielsweise Kunststoffschäume, beispielsweise aus Polyvinylchlorid, Polystyrol oder Polyurethan. Schäume weisen Gasblasen auf, welche bei der Herstellung erzeugt werden. Hierdurch ergibt sich eine Schallkennimpedanz, welche sich in grober Näherung wie folgt berechnet:

$$\rho = V_1\rho_1 + V_2\rho_2$$

$$\kappa = V_1\kappa_1 + V_2\kappa_2$$

mit

$$\kappa_i = c_i^2\rho_i$$

sich also aus einer gewichteten Mittelung der Dichte $\rho$ und der Kompressibilität $\kappa$ in den Medien Gas und Polymer mittels der jeweiligen Volumenanteile $V$ abschätzen lässt. Die Reflexion kann somit über die Dicke und Zusammensetzung des geschäumten Materials gezielt beeinflusst werden. Vorzugsweise weist die zweite Hülle aus einem geschäumten Material eine Dicke von 5 mm bis 30 mm, bevorzugt von 10 mm bis 20 mm. Aufgrund der durch die Gasblasen vergleichsweise geringen Schallgeschwindigkeit im Schaum ist diese Dicke ausreichend für eine effiziente Reflexion der Detektionswelle.

In einer Ausführungsform der Erfindung sind Objekte mit großer Rückstreusignatur angeordnet. Bei einem Objekt mit großer Rückstreusignatur kann es sich beispielsweise um den Druckkörper, ein Torpedorohr, einen Schnorchel, ein Periskop oder dergleichen handeln. Diese Objekte mit großer Rückstreusignatur können oftmals formmäßig nicht auf die Minimierung der Signatur ausgelegt werden, sondern unterliegen anderen technischen Anforderungen, und werden deshalb bevorzugt unterhalb der zweiten Hülle angeordnet.

Alternativ kann die erste Hülle transparent für Radarstrahlung und die zweite Hülle undurchlässig für Radarstrahlung sein. Diese Ausführungsform ist bei einem Wasserfahrzeug für den Überwasserbereich, beispielsweise bei Unterseebooten für den Turm bevorzugt.

Erfindungsgemäß ist in wenigstens einem zweiten Bereich unter der ersten Hülle und unter der zweiten Hülle eine dritte Hülle angeordnet. Die dritte Hülle bildet einen Druckkörper.

In einer weiteren Ausführungsform der Erfindung wird die erste Detektionswelle zu mehr als 50% gerichtet in eine um wenigstens 6 °, bevorzugt um wenigstens 12 °, besonders bevorzugt um wenigstens 20 ° abgelenkte Richtung von der eintreffenden ersten Detektionswelle (50) reflektiert. Bevorzugt befindet sich in der abgelenkten Richtung kein weiteres reflektierendes und/oder absorbierendes Bauteil des Unterseeboots mehr, die Detektionswelle wird nach der Reflexion an der zweiten Hülle durch die erste Hülle vom Unterseeboot weg reflektiert. Die Detektionswelle wird bevorzugt nur einmal am Unterseeboot reflektiert.

In einer weiteren Ausführungsform der Erfindung handelt es sich bei der ersten Detektionswelle um eine Schallwelle oder eine elektromagnetische Welle. Schallwellen werden als Detektionswellen im Sonar verwendet, elektromagnetische Wellen im Radar. Bevorzugt weist die Schallwelle eine Frequenz von 10$^1$ Hz bis 10$^5$ Hz auf. Bevorzugt weist die elektromagnetische Welle eine Frequenz von 10$^9$ bis 10$^{12}$ Hz, auf.

In einer weiteren Ausführungsform der Erfindung ist die erste Detektionswelle eine Schallwelle und die Reflexionswelle wird nach unten reflektiert. Schallwellen werden typischer Weise im Sonar zur Ortung von Unterwasserfahrzeugen eingesetzt. Hauptanwendungsgebiet ist daher die Ortung eines Unterwasserbootes durch ein Überwasserschiff. Somit kommt in diesem Szenario die erste Detektionswelle üblicherweise leicht oberhalb der Horizontalen auf das Unterwasserboot. Durch die Ablenkung nach unten wird die Sonarwelle auf den Meeresgrund geleitet und kann nicht durch das Überwasserschiff oder ein anderes Überwasserschiff aufgefangen werden.

In einer weiteren Ausführungsform der Erfindung ist die erste Detektionswelle eine elektromagnetische Welle und die Reflexionswelle wird nach oben reflektiert. Elektromagnetische Wellen werden typischer Weise im Radar zur Ortung von Überwasserfahrzeugen eingesetzt. Hauptanwendung ist daher die Ortung eines Überwasserschiffes oder eines aufgetauchten Unterwasserbootes durch ein anderes Überwasserschiff. Hier ist die Ablenkung nach oben sinnvoll, da die Wasseroberfläche als weitere Reflexionsfläche wirken könnte und so den Radarstrahl auf das weitere Überwasserschiff zurückleiten könnte.

In einer weiteren Ausführungsform der Erfindung ist die Form der zweiten Hülle zur Minimierung der Signatur gegenüber einer horizontal einfallenden ersten Detektionswelle optimiert. Die stärkste Bedrohung entsteht für ein Fluidfahrzeug, insbesondere ein Wasserfahrzeug in der Ortung durch ein anderes Fluidfahrzeug, insbesondere ein Wasserfahrzeug. Im Überwasserbereich kommt daher eine eintreffende Radarwelle praktisch horizontal. Es muss daher verhindert werden, dass diese horizontal reflektiert wird. Für den Unterwasserbereich gilt dieses analog. Eine übliche Tauchtiefe liegt bei etwa 100 m.

Ein anderes Wasserfahrzeug, welches sich an der Wasseroberfläche in nur 1.000 m Entfernung befindet und ein aktives Sonar verwendet, um das Unterseeboot zu finden, verwendet eine Detektionswelle, welche in einem Winkel von weniger als 6 ° und damit mit nur geringer Abweichung von der Horizontalen auf das Unterseeboot trifft. Bei einer Distanz von 3.000 m liegt der Winkel bereits unter 3° und bei einer Distanz von 6.000 m unter 1°. Auch kann ein getauchtes Unterseeboot von einem anderen getauchten Unterseeboot in praktisch jedem beliebigen Winkel mit einer Detektionswelle angestrahlt werden, dieses Szenario ist jedoch in der Praxis eher zu vernachlässigen. Es ist daher vorteilhaft die Geometrie der zweiten Hülle auf das Eintreffen einer horizontalen Welle zu optimieren.

Bei den vorgenannten Betrachtungen handelt es sich um vereinfachende Betrachtungen und Näherungen, welche jedoch eine ausreichende Genauigkeit für die hier betrachteten Effekte aufweist.

In einer weiteren Ausführungsform der Erfindung weist die zweite Hülle wenigstens eine ebene Fläche auf. Die ebene Fläche ist die einfachste Form, eine eintreffende erste Detektionswelle in eine andere Richtung zu reflektieren. Da bei den meisten Ortungssystemen Sender und Empfänger räumlich eng beieinander liegen, bietet diese Form eine gute Optimierung der Signatur.

In einer weiteren Ausführungsform der Erfindung weist das Objekt neben einer ersten Hülle und einer zweiten Hülle eine vierte Hülle auf, wobei die zweite Hülle unter der ersten Hülle angeordnet ist und die vierte Hülle unter der zweiten Hülle angeordnet ist. Die erste Hülle ist für eine erste Detektionswelle und eine zweite Detektionswelle transparent. Die zweite Hülle ist für die erste Detektionswelle undurchlässig und für die zweite Detektionswelle transparent. Die vierte Hülle ist für die zweite Detektionswelle undurchlässig. Die Form der zweiten Hülle ist zur Minimierung der Signatur gegenüber der ersten Detektionswelle optimiert. Die Form der vierten Hülle ist zur Minimierung der Signatur gegenüber der zweiten Detektionswelle optimiert. Beispielsweise handelt es sich bei der ersten Detektionswelle um Sonar, bei der zweiten Detektionswelle um Radar. Unter der vierten Hülle kann beispielsweise der Druckkörper angeordnet sein.

In einer weiteren Ausführungsform der Erfindung weist die Flächennormale der wenigstens einen ebenen Fläche einen Winkel zur Längsrichtung des Fluidfahrzeugs, insbesondere eines Unterseebootes, von wenigstens 6°, bevorzugt von wenigstens 12°, besonders bevorzugt von wenigstens 20° auf. Die Flächennormale ist der Vektor, der orthogonal auf der Fläche steht. Da die meisten Detektionswellen unter einem Winkel von 0° bis 6° auf das Fluidfahrzeug treffen, weist die wenigstens eine erste ebene Fläche eine Neigung von wenigstens 6° gegenüber der Vertikalen auf, wobei die Längsrichtung des Fluidsfahrzeugs parallel zur Horizontalen verläuft. Zwar kann beispielsweise ein getauchtes Unterseeboot beim Auf- oder Abtauchen auch eine Abweichung der Längsrichtung des Fluidfahrzeugs von der Horizontalen aufweisen, da diese Orientierung jedoch vergleichsweise selten vorkommt, wird das Fluidfahrzeug hinsichtlich der Signatur auf eine horizontale Ausrichtung der Längsrichtung des Fluidfahrzeugs optimiert. Die wenigstens eine ebene Fläche weist eine Neigung von wenigstens 12° auf. Dieser Winkel ist besonders bevorzugt, da wie dargestellt eine Abweichung der Einstrahlrichtung der Detektionswelle von bis zu 6° von der Horizontalen als wahrscheinlich anzusehen ist. Des Weiteren erfolgt die Reflexion regelmäßig nicht scharf in nur einem Winkel, sondern es ergibt sich regelmäßig ein Kegel, bei welchem die höchste Intensität entsprechend der Reflexion in diese Winkelrichtung reflektiert wird und die Energie mit Abweichung von diesem Winkel immer stärker abfällt. Figur 2 zeigt die Charakteristik der Reflexion einer ebenen Platte mit der Abmessung von drei Wellenlängen (L = 3λ). Die Welle kommt als ebene Welle aus der Richtung von 0° und wird an der um 12° geneigten Platte in die Hauptrichtung von 24° Reflektiert. Die Reflexion zurück zur 0° Richtung ist um mehr als 18 dB geringer.

Besonders bevorzugt ist die wenigstens eine erste Fläche bei einem Wasserfahrzeug um einen Winkel von wenigstens 6°, bevorzugt von wenigstens 12°, besonders bevorzugt von wenigstens 20° nach unten geneigt. So wird eine Detektionswelle von der Wasseroberfläche weg auf den Grund und somit vom Sensor weg reflektiert. Diese Anordnung lässt sich jedoch nur in wenigen Bereichen des Wasserfahrzeugs realisieren und ist daher bevorzugt, wenn die zweite Hülle nur in einem ausgewählten ersten Bereich, beispielsweise im Bug, angeordnet ist.

In einer weiteren Ausführungsform der Erfindung bestehen die erste Hülle aus Stahl oder einem faserverstärktem Verbundwerkstoff und die zweite Hülle aus einem Hartschaum. Diese Ausführungsform ist für ein Wasserfahrzeug bevorzugt.

In einer weiteren Ausführungsform der Erfindung bestehen die erste Hülle aus einem faserverstärkten Verbundwerkstoff und die zweite Hülle aus Metall oder einem anderen elektrisch leitenden Material, beispielsweise Stahl.

Selbstverständlich ist es auch möglich, dass eine vierte Hülle zwischen der zweiten Hülle und der dritten Hülle angeordnet ist. In diesem Fall ist die erste Hülle für eine erste Detektionswelle und eine zweite Detektionswelle transparent, die zweite Hülle für eine erste Detektionswelle undurchlässig und für eine zweite Detektionswelle transparent und die vierte Hülle für die zweite Detektionswelle undurchlässig. Hierdurch kann die erste Hülle hinsichtlich der fluiddynamischen Eigenschaften optimiert, die zweite Hülle hinsichtlich der Signatur der ersten Detektionswelle und die vierte Hülle hinsichtlich der Signatur der zweiten Detektionswelle optimiert werden. Dieses Prinzip lässt sich auf weitere zusätzliche Hüllen ausdehnen.

Nachfolgend ist das erfindungsgemäße Fluidfahrzeug anhand eines Wasserfahrzeugs in den Zeichnungen dargestellter Ausführungsbeispiele näher erläutert.

Figur 1: Reflexionskoeffizient bezüglich der Intensität ($|R^2|$) für eine 10 mm dicke Stahlplatte und eine 20 mm dicke GFK-Platte in Wasser
Figur 2: Charakteristik der Reflexion einer ebenen Platte mit der Abmessung von drei Wellenlängen
Figur 3: schematischer Querschnitt durch ein erstes nicht erfindungsgemäßes Unterseeboot
Figur 4: schematischer Querschnitt durch ein zweites erfindungsgemäßes Unterseeboot
Figur 5: schematischer Querschnitt durch ein drittes erfindungsgemäßes Unterseeboot

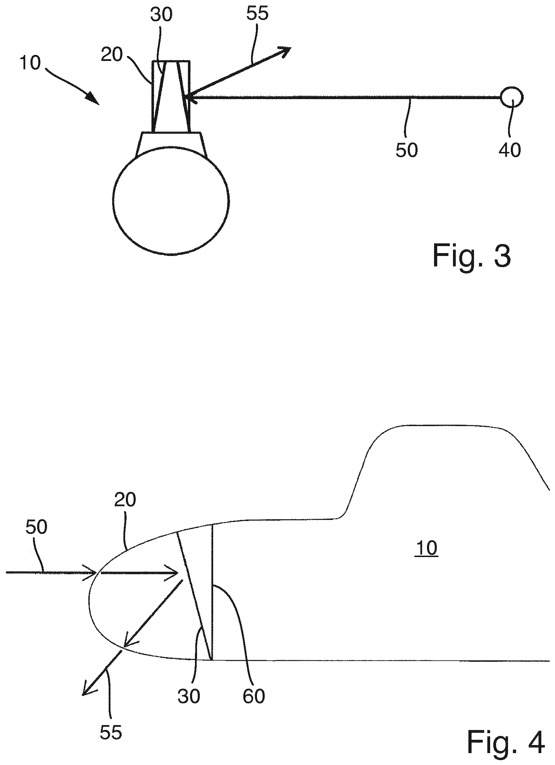

In Figur 3 ist ein erstes nicht erfindungsgemäßes Unterseeboot 10 gezeigt. Das Unterseeboot 10 weist eine hydrodynamisch optimierte erste Hülle 20 auf. Diese unterscheidet sich von konventionellen Unterseebooten nach dem Stand der Technik durch einen besonders schmalen Turm. Bei konventionellen Unterseebooten wird die Außenhaut üblicherweise zur Reduktion der Signatur schräg geführt, um senkrechte Flächen zu vermeiden. Hierdurch wird der Turm an der Basis deutlich breiter und bewirkt so einen messbar erhöhten Strömungswiderstand. Erfindungsgemäß ist die erste Hülle 20 transparent für die Detektionswelle 50, welche von einem Sender 40, beispielsweise einem Schiff überwiegend horizontal ausgesendet wird. Ortsgleich mit dem Sender befindet sich auch der Empfänger 40, beispielsweise sind beide Bestandteil eines Schiffs. Die erste Hülle 20 ist hier aus einem faserverstärkten Verbundwerkstoff hergestellt und somit praktisch transparent für elektromagnetische Strahlung im Bereich $10^9$ bis $10^{12}$ Hz und im getauchten Zustand auch transparent für Sonarschall. Unterhalb der ersten Hülle 20 befindet sich in einem ersten Bereich, dem Turm, eine zweite Hülle 30. Die zweite Hülle ist für elektromagnetische Strahlung im Bereich $10^9$ bis $10^{12}$ Hz und Sonarschall reflektierend, beispielsweise ist die zweite Hülle 30 aus Stahl. Die zweite Hülle weist eine Neigung von 10° gegenüber der Vertikalen auf und ist als ebene Fläche ausgeführt. Hierdurch wird die eintreffende Detektionswelle 50 in einem Winkel von 20° zur Horizontalen reflektiert und kann dem Empfänger 40 nicht erreichen. Damit ist das Unterseeboot 10 nicht durch den Sender und Empfänger 40 zu orten.

Durch die in Figur 3 gezeigte zweite Hülle 30 müssen aus Platzgründen gegebenenfalls Objekte wie ein Periskop oder ein Schnorchel durchgeführt werden. Diese befinden sich damit außerhalb der zweiten Hülle 30 und tragen somit zu einer Vergrößerung des Rückstreuquerschnitts und somit zu einer Verschlechterung der Signatur bei. Dieser Effekt ist jedoch gering im Vergleich zur hydrodynamischen Optimierung der Form der ersten Hülle 20 und der Optimierung der Signatur durch die zweite Hülle 30.

Selbstverständlich ist auch denkbar, dass die zweite Hülle 30 nicht wie dargestellt nur aus einer ebenen Fläche besteht, sondern dass die zweite Hülle 30 aus mehreren ebenen Flächen besteht, welche sägezahnartig angeordnet sind, wobei die einzelnen Flächen eine Flächennormale aufweisen, welche vorzugsweise einen Winkeln von beispielsweise + 15 ° bzw. - 15° aufweisen. Hierdurch ist eine kompaktere Bauweise möglich.

In Figur 4 ist ein erfindungsgemäßes Unterseeboot 10 gezeigt. In diesem gezeigten Beispiel ist der erste Bereich, welcher optimiert wird, der Bugbereich. Im Bugbereich findet sich unter der für Sonar transparenten ersten Hülle 20 eine zweite Hülle 30 und hinter der zweiten Hülle 30 eine dritte Hülle 60, welche den Druckkörper bildet. Im mittleren Bereich des Unterseeboots 10 kann das Unterseeboot 10 als Einhüllenboot ausgeführt sein, sodass hier die erste Hülle 20 auch den Druckkörper bildet. Die zweite Hülle 30 ist vorzugsweise als eine ebene Fläche ausgeführt, welche eine Neigung von 12° nach unten im Vergleich zur Vertikalen aufweist. Hierdurch wird eine horizontal eintreffende Detektionswelle 50 in einem Winkel von 24° nach unten als Reflexionswelle 55 reflektiert. Hierdurch kann eine Ortung des Unterseeboots 10 erfolgreich verhindert werden. In diesem Fall besteht die erste Hülle 20 vorzugsweise aus Stahl, die zweite Hülle 30 vorzugsweise aus Schaum, insbesondere aus geschlossenzelligem Polyurethan-Schaum. Der Bereich zwischen der ersten Hülle 20 und der dritten Hülle 60 ist mit Wasser gefüllt. Dadurch ist die erste Hülle 20 für die Detektionswelle 50 und die Reflexionswelle 55 transparent. Die zweite Hülle 30 besteht beispielsweise aus einer 15 mm dicken Schaumplatte, welche gute Reflexionseigenschaften für Schall und somit für die Detektionswelle 50 aufweist.

Bei dem in Figur 4 gezeigten Beispiel müssen die nicht dargestellten Waffenrohre, welche von der dritten Hülle 60 und somit aus dem Inneren des Unterseeboots 10, bis zur ersten Hülle 20 verlaufen auch durch die zweite Hülle 30 geführt werden. Hierdurch liegt ein Teil der Waffenrohre vor der zweiten Hülle 30 und trägt somit zur Signatur bei. Jedoch ist dieser Beitrag aufgrund der Form der Waffenrohre vergleichsweise gering.

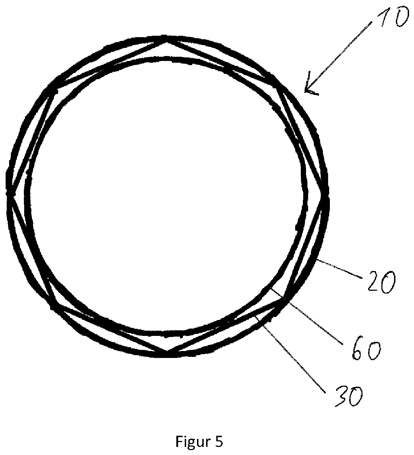

Figur 5 zeigt ein Querschnitt durch ein weiteres erfindungsgemäßes Unterseeboot 10 gezeigt.

Das Unterseeboot 10 ist als Doppelhüllenboot ausgeführt und weist eine erste Hülle 20 auf und einen durch die dritte Hülle 60 gebildeten und von der ersten Hülle 20 beabstandeten Druckkörper. Die erste Hülle 20 ist aus Faserverbundstoff und die dritte Hülle 60 ist aus Stahl gefertigt. Zwischen der ersten Hülle 20 und der dritten Hülle 60 wird eine zweite Hülle 30 angeordnet, welche beispielhaft aus acht ebenen Flächen besteht. Zur Vermeidung einer Reflexion in horizontaler Richtung sind die ebenen Flächen so angeordnet, dass die Flächennormalen der Flächen einen Winkel von 22,5 ° bzw. 147,5 ° zur Horizontalen aufweisen. Die zweite Hülle 30 ist aus 15 mm dicken Schaum-Platten gefertigt.

Es ergibt sich, dass beispielsweise die in den Figuren gezeigten Ausführungsbeispiele miteinander kombinierbar sind, um beispielsweise die Radar-Signatur des Turmes gemäß dem in Figur 3 gezeigten Beispiel und die Sonar-Signatur des Bootskörpers gemäß den in Figur 4 und/oder Figur 5 gezeigten Ausführungsbeispielen zu optimieren.

Bezugszeichen:

10    Unterseeboot
20    erste Hülle
30    zweite Hülle
40    Sender und Empfänger
50    Detektionswelle
55    Reflexionswelle
60    dritte Hülle

**Patentansprüche**

1. Unterseeboot (10) bestehend aus einer ersten Hülle (20) und einer zweiten Hülle (30), wobei die zweite Hülle (30) wenigstens in einem ersten Bereich unter der ersten Hülle (20) angeordnet ist, wobei die Form der ersten Hülle (20) in zumindest diesem Bereich fluiddynamisch optimiert ist, wobei die erste Hülle (20) für eine erste Detektionswelle (50) transparent ist und die zweite Hülle (30) für die erste Detektionswelle (50) undurchlässig ist und die Form der zweiten Hülle (30) zur Minimierung der Signatur gegenüber der erste Detektionswelle (50) optimiert ist, wobei die Form der ersten Hülle, welche für die fluiddynamischen Eigenschaften wesentlich ist, und die Form der zweiten Hülle, welche für die Signatur wesentlich ist, vollständig voneinander entkoppelt sind, wobei in wenigstens einem zweiten Bereich unter der ersten Hülle (20) und unter der zweiten Hülle (30) eine dritte Hülle (60) angeordnet ist und wobei die dritte Hülle (60) einen Druckkörper bildet, wobei die erste Hülle (20) von Wasser hinterspült ist, **dadurch gekennzeichnet, dass** die zweite Hülle (30) für die erste Detektionswelle (50) reflektierend ist.

2. Unterseeboot (10) nach Anspruch 1, **dadurch gekennzeichnet, dass** die erste Detektionswelle (50) zu mehr als 50% gerichtet in eine um wenigstens 6° abgelenkte Richtung von der eintreffenden ersten Detektionswelle (50) reflektiert wird.

3. Unterseeboot (10) nach einem der vorangegangenen Ansprüche, **dadurch gekennzeichnet, dass** es sich bei der ersten Detektionswelle (50) um eine Schallwelle oder eine elektromagnetische Welle handelt.

4. Unterseeboot (10) nach Anspruch 3, **dadurch gekennzeichnet, dass** die erste Detektionswelle (50) eine Schallwelle ist und dass die Reflexionswelle (55) nach unten reflektiert wird.

5. Unterseeboot (10) nach Anspruch 3, **dadurch gekennzeichnet, dass** die erste Detektionswelle (50) eine elektromagnetische Welle ist und dass die Reflexionswelle (55) nach oben reflektiert wird.

6. Unterseeboot (10) nach einem der vorangegangenen Ansprüche, **dadurch gekennzeichnet, dass** Detektionswellen, die dieselbe oder eine ähnliche optimale Geometrie aufweisen, an derselben Hülle reflektiert werden.

7. Unterseeboot (10) nach einem der vorangegangenen Ansprüche, **dadurch gekennzeichnet, dass** die Form der zweiten Hülle (30) zur Minimierung der Signatur gegenüber einer horizontal einfallenden Detektionswelle (50) optimiert ist.

8. Unterseeboot (10) nach einem der vorangegangenen Ansprüche, **dadurch gekennzeichnet, dass** die zweite Hülle (30) wenigstens eine ebene Fläche aufweist.

9. Unterseeboot (10) nach Anspruch 8, **dadurch gekennzeichnet, dass** die Flächennormale der wenigstens einen ebenen Fläche einen Winkel zur Längsrichtung des Unterseeboots (10) von wenigstens 6° aufweist.

10. Unterseeboot (10) nach einem der vorangegangenen Ansprüche, **dadurch gekennzeichnet, dass** die erste Hülle (20) aus Stahl oder einem faserverstärkten Verbundwerkstoff besteht und die zweite Hülle (30) aus einem Hartschaum.

11. Unterseeboot (10) nach einem der vorangegangenen Ansprüche 1-9, **dadurch gekennzeichnet, dass** die erste Hülle (20) aus einem faserverstärktem Verbundwerkstoff und die zweite Hülle (30) aus einem Metall oder einem anderen elektrisch leitenden Material besteht.

**Claims**

1. Submarine (10), consisting of a first hull (20) and a second hull (30), wherein the second hull (30) is arranged at least in a first region under the first hull (20), wherein the shape of the first hull (20) in at least this region is fluid-dynamically optimized, wherein the first hull (20) is transparent to a first detection wave (50) and the second hull (30) is opaque to the first detection wave (50) and the shape of the second hull (30) is optimized to minimize the signature with respect to the first detection wave (50), wherein the shape of the first hull, which is essential to the fluid-dynamic properties, and the shape of the second hull, which is essential to the signature, are completely decoupled from one another, wherein, in at least a second region, a third hull (60) is arranged under the first hull (20) and under the second hull (30) and wherein the third hull (60) forms a pressure hull, wherein the first hull (20) is backflushed with water, **characterized in that** the second hull (30) is reflective to the first detection wave (50).

2. Submarine (10) according to Claim 1, **characterized in that** over 50% of the first detection wave (50) is reflected in a direction that is diverted by at least 6° from the incident first detection wave (50).

3. Submarine (10) according to one of the preceding claims, **characterized in that** the first detection wave (50) is a sound wave or an electromagnetic wave.

4. Submarine (10) according to Claim 3, **characterized in that** the first detection wave (50) is a sound wave and **in that** the reflection wave (55) is reflected downwards.

5. Submarine (10) according to Claim 3, **characterized in that** the first detection wave (50) is an electromagnetic wave and **in that** the reflection wave (55) is reflected upwards.

6. Submarine (10) according to one of the preceding claims, **characterized in that** detection waves that have the same or a similar optimum geometry are reflected at the same hull.

7. Submarine (10) according to one of the preceding claims, **characterized in that** the shape of the second hull (30) is optimized to minimize the signature with respect to a horizontal incident detection wave (50).

8. Submarine (10) according to one of the preceding claims, **characterized in that** the second hull (30) comprises at least one planar surface.

9. Submarine (10) according to Claim 8, **characterized in that** the surface normal of the at least one planar surface is at an angle to the longitudinal direction of the submarine (10) of at least 6°.

10. Submarine (10) according to one of the preceding claims, **characterized in that** the first hull (20) consists of steel or a fibre-reinforced composite material and the second hull (30) consists of a rigid foam.

11. Submarine (10) according to one of the preceding Claims 1-9, **characterized in that** the first hull (20) consists of a fibre-reinforced composite material and the second hull (30) consists of a metal or some other electrically conductive material.

**Revendications**

1. Sous-marin (10), comprenant une première enveloppe (20) et une deuxième enveloppe (30), la deuxième enveloppe (30) étant disposée, au moins dans une première région, sous la première enveloppe (20), la forme de la première enveloppe (20) est optimisée hydrodynamiquement au moins dans ladite première région, la première enveloppe (20) étant transparente à une première onde de détection (50) et la deuxième enveloppe (30) étant opaque à la première onde de détection (50) et la forme de la deuxième enveloppe (30) étant optimisée de manière à minimiser la signature vis-à-vis de la première onde de détection (50), la forme de la première enveloppe, qui est essentielle pour les propriétés hydrodynamiques, et la forme de la deuxième enveloppe, qui est essentielle pour la signature, étant totalement découplées l'une de l'autre, une troisième enveloppe (60) étant disposée, au moins dans une deuxième région, sous la première enveloppe (20) et sous la deuxième enveloppe (30), la troisième enveloppe (60) formant un corps de pression, l'eau pouvant pénétrer derrière la première enveloppe (20), **caractérisé en ce que** la deuxième enveloppe (30) est réfléchissante vis-à-vis de la première onde de détection (50).

2. Sous-marin (10) selon la revendication 1, **caractérisé en ce que** la première onde de détection (50) est réfléchie à plus de 50 % dans une direction déviée d'au moins 6° par rapport à la première onde de détection (50) incidente.

3. Sous-marin (10) selon l'une quelconque des revendications précédentes, **caractérisé en ce que** la première onde de détection (50) est une onde sonore ou une onde électromagnétique.

4. Sous-marin (10) selon la revendication 3, **caractérisé en ce que** la première onde de détection (50) est une onde sonore et que l'onde réfléchie (55) est dirigée vers le bas.

5. Sous-marin (10) selon la revendication 3, **caractérisé en ce que** la première onde de détection (50) est une onde électromagnétique et que l'onde réfléchie (55) est dirigée vers le haut.

6. Sous-marin (10) selon l'une quelconque des revendications précédentes, **caractérisé en ce que** les ondes de détection qui présentent la même géométrie optimale ou une géométrie optimale similaire sont réfléchies sur la même enveloppe.

7. Sous-marin (10) selon l'une quelconque des revendications précédentes, **caractérisé en ce que** la forme de la deuxième enveloppe (30) est optimisée de manière à minimiser la signature vis-à-vis d'une onde de détection (50) incidente horizontale.

8. Sous-marin (10) selon l'une quelconque des revendications précédentes, **caractérisé en ce que** la deuxième enveloppe (30) comporte au moins une surface plane.

9. Sous-marin (10) selon la revendication 8, **caractérisé en ce que** la normale à la surface de l'au moins une surface plane forme un angle d'au moins 6° avec la direction longitudinale du sous-marin (10).

10. Sous-marin (10) selon l'une quelconque des revendications précédentes, **caractérisé en ce que** la première enveloppe (20) est composée d'acier ou d'une matière de synthèse composite renforcée par de la fibre et la deuxième enveloppe (30) est composée d'une mousse rigide.

11. Sous-marin (10) selon l'une quelconque des revendications précédentes 1 à 9, **caractérisé en ce que** la première enveloppe (20) est constituée d'un matériau composite renforcé par des fibres et la deuxième enveloppe (30) est métallique ou composée d'un autre matériau conducteur de l'électricité.

Fig. 1

Fig. 2

Fig. 3

Fig. 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3332754 A1
- DE 8809318 U1
- DE 1196531 A
- DE 3123754 C1
- US 5128678 A
- US 2014254000 A1
- EP 1102028 A2
- US 5536910 A
- US 5276447 A